# EUROPEAN PATENT APPLICATION

(11) **EP 4 279 416 A1**
(43) Date of publication of application: **22.11.2023**
(21) Application number: 23020085.9
(22) Date of filing: 22.02.2023
(51) Int. Cl.: B65D 90/06, C12H 1/22

(54) **SELF-STANDING THERMALLY INSULATED TANK FOR PRESERVATION OF WINE AND OTHER LIQUID FOODSTUFFS AND PROCESS OF REMODELLING A NON-INSULATED TANK FOR PRESERVATION OF WINE AND OTHER LIQUID FOODSTUFFS**

(30) Priority: 19.05.2022 HR P20220645
(71) Applicant: Letina Intech d.o.o., 40000 Cakovec (HR)
(72) Inventor: LETINA, Mladen, 40306 Macinec (HR)
(74) Representative: Strniscak, Tomislav

(57) **Abstract**

The self-standing thermally insulated tank for preservation of wine and other liquid foodstuffs 100 in the present invention comprises the inner tank (200) and thermal insulation designed in a segmental form (40,31,32,36) wherein the inner tank 200 is in the shape of a cylinder constituted by the mantle (1), the cap (2) from the upper side and the bottom (4), while the thermal insulation is constituted by the front insulation segment (40) which has an installed thermal insulation throughout its entire volume and the front insulation segment (40) is fixedly attached to the inner tank (200) and further comprises insulation segments (31,32 and 36) which also contain thermal insulation in their entire volume and which are placed on the mantle (1) portion, cap (2) portion from the upper side and the bottom (4) portion from the lower side so that they form together with the front insulation segment a single unit which entirely thermally insulates the inner tank (200) from the environment.

## Description

### FIELD OF THE INVENTION

The present invention relates to the equipment used in the process of production and preservation of wine and other liquid foodstuffs that require preservation under certain stabile temperature conditions, more precisely it refers to thermally insulated tanks for preservation of wine and other liquid foodstuffs.

### TECHNICAL PROBLEM

The usage of stainless steel wine containers and tanks for wine preservation is well known in the fields of wine cellaring and wine production. To produce particular quality and predicate types of wine, quality repeatability and elimination of the external environmental impacts on the process of preservation, storage, or production of wine thermally insulated tanks for preservation of wine have emerged in the market so that neither the room temperature in which the tank for wine preservation is placed nor the temperature variations influence the wine temperature inside the stainless steel container.

Thermally insulated tanks are generally designed in a way in which the inner tank that holds liquid is plated with a layer of thermally insulating material and covered with a stainless steel mantle. The inventor has noticed a problem with the impossibility of a periodic inspection of the outer wall of the inner tank, but also how to enable the reparation of the inner tank in case of leakage. Since the outer stainless steel mantle is fixedly attached to the tank, it is, namely, not possible to access the damaged spot of the inner tank on existing tanks without cutting it, i.e. the spot that requires repair and remediation.

A further technical problem is the question of thermal insulation of existing non-insulated tanks for wine and liquid foodstuffs because the tanks are already located in certain rooms (cellars) and is, therefore, extremely difficult to handle large sheet pieces, i.e., to install thermal insulation on existing tanks.

The inventor has come up with a system of segmented installation of thermal insulation so that all the preparation, elaboration, and production of parts is carried out at a plant, whereas the installation takes place at the location of the tank, which excludes any kind of handling or movement of the tank.

### PRIOR ART

Self-standing thermally insulated stainless steel tanks exist in the market. Such tanks do not have segmented thermal insulation, but generally, it is a stainless steel tank covered with two mantles, one from the inside where the wine or other liquid foodstuff is preserved and one on the outside that functions as protection and enables easy maintenance of the tank surface cleanliness. The space between the inner and the outer tank is usually filled with polyurethane foam which has proven to be the best for these purposes.

After the prior art search the inventor hasn't encountered, nor was he familiar with the existence of a solution based on the segmented thermal insulation that also forms the wall of the outer tank.

### BRIEF SUMMARY OF THE PRESENT INVENTION

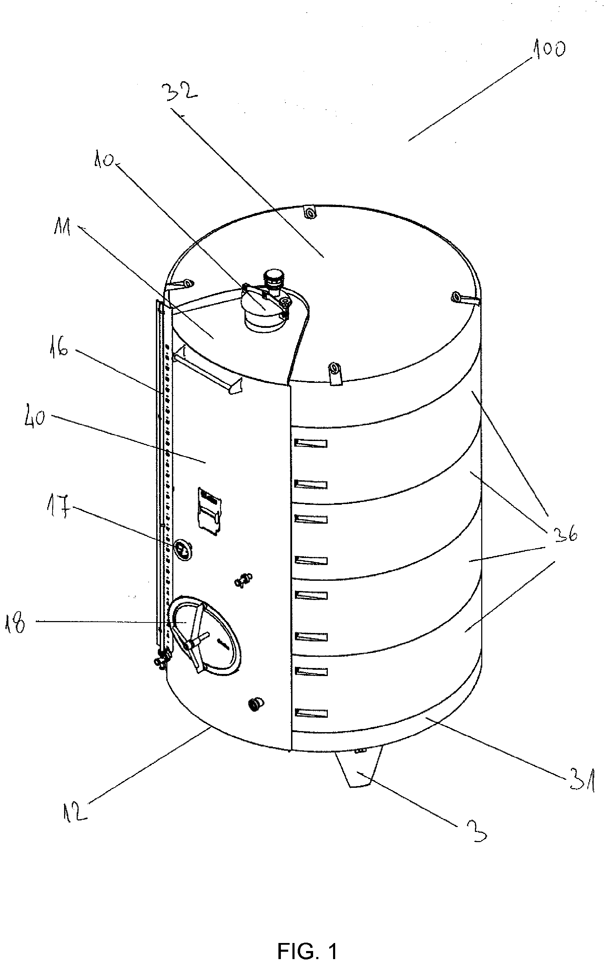

The self-standing thermally insulated tank for preservation of wine and other liquid foodstuffs is shown in figure 1. Its appearance is essentially no different from a non-insulated stainless steel tank. Basically, like any self-standing tank, it contains three or four legs on which such a tank stands. Wine or liquid foodstuff is stored in the inner tank which is in the shape of a cylinder constituted by a mantle, a cap on the upper side, and a bottom on the lower side of that cylinder. Thermal insulation of this tank is solved through segments, namely the front insulation segment, which has an installed thermal insulation throughout the volume. The front insulation segment is fixedly attached to the inner tank. Other insulation segments are mobile and also contain thermal insulation throughout their entire volume, and these segments are shape-adjusted so that they can be placed against the mantle portion, the cap portion on the upper side, and the bottom portion on the lower side and they follow their contours. When all insulation segments are placed on the inner tank, one unit is obtained that completely thermally insulates the inner tank from the environment. The basic thing about the embodiment of each insulation segment is that there is a stainless steel sheet on the outside (towards the environment) and that a persistent antibacterial agent is applied on the inner side of this sheet to which polyurethane foam is applied (usually in a mould).

The front insulation segment furthermore contains an outer mantle segment, an outer cap segment, and an outer bottom segment all combined into a single unit. The present tank contains usual parts that such tanks have such as a top door, the main door, a level indicator, and a thermometer. The top door is located on the outer cap segment so that the inner tank can be accessed therethrough, whereas the main door, the level indicator, and the thermometer are located on the outer mantle segment and the inner tank can be accessed through the main door. The level indicator shows the liquid level in the inner tank and the thermometer shows the liquid temperature inside the inner tank.

The lateral insulation segments are designed in the shape of a sector of a cylinder mantle portion with an arc range from 90 to 165 degrees, wherein the front insulation segment has an arc width from 30 to 180 degrees, wherein the arc angle of the lateral insulation segment is determined by subtracting from 360 degrees the arc width of the front insulation segment in degrees and the amount thus obtained is divided by two, wherein there are always two lateral insulation segments in one band which are interconnected by screws and are also connected to the front insulation. The lateral insulation segments usually have an upper tooth on the upper side and a lower tooth on the lower side, so that the lower tooth of one lateral insulation segment falls on the upper tooth of another lateral insulation segment below it when the lateral insulation segments are stacked one on top of the other. This ensures good adhesion of lateral insulation segments to one another and good thermal insulation. The upper tooth might be a recess or a channel and the lower tooth might be a protrusion, in shapes that protrusion fits in a recess closing the air flow, what makes tight connection in-between two lateral insulation segments. The cap insulation segment is in the shape of the cylinder top with the mantle portion so that it fits on the cap of the inner tank and has a sector that shape-wise corresponds to the outer cap segment so that when the cap insulation segment is placed on the cap the said closely touches the outer cap segment, and likewise, the cap insulation segment is tightly seated on the upper side of the uppermost pair of the lateral insulation segments. The bottom insulation segment is in the shape of the cylinder bottom with a mantle portion designed to fit the bottom of the inner tank and has a sector with a shape corresponding to the outer bottom segment, so when the bottom insulation segment is placed on the bottom, the said closely touches the outer bottom segment. The bottom insulation segment is tightly seated on the lower side of the lowermost pair of lateral insulation segments. The number of lateral insulation segments per single tank ranges from 2 lateral insulation segments to 10 segments. The usual height of segments is 50 cm.

Each insulation segment contains a front stainless steel sheet on the back of which polyurethane foam 3 to 12 cm thick has been applied, in the standard version 8 cm, so that when the insulation segments are placed on the inner tank there is a polyurethane foam between the inner tank and the front stainless steel sheet.

Since there is a problem with installing thermal insulation on the existing stainless steel tanks for preservation of wine and other liquid foodstuffs, either because of the lack of space or because of the tank handling problem, the present invention shows the process of remodelling the existing non-insulated tank for preservation of wine and other liquid foodstuffs.

The tank for which thermal insulation segments are manufactured is previously measured, segments drafts are made and then the said are produced, delivered to the place where the front insulation segment is installed on the existing tank, and then the bottom insulation segment, the cap insulation segment and lateral insulation segments are added as mobile parts. The parts on the tanks such as connecting pipes, the thermometer, and the like that have already been welded, must be dismantled i.e., must be adjusted during the installation of thermal insulation so that they are located on the outer portion of the insulation segment.

### BRIEF DESCRIPTION OF THE DRAWINGS

The accompanying drawings which are incorporated in the description, and which form a part of the invention description, illustrate so far, the best-considered embodiment of the invention and help to explain the basic principles of the invention. This invention is not in any way limited by drawings that are an integral part of the present invention.
Figure 1. A view of the self-standing thermally insulated tank for preservation of wine and other liquid foodstuffs

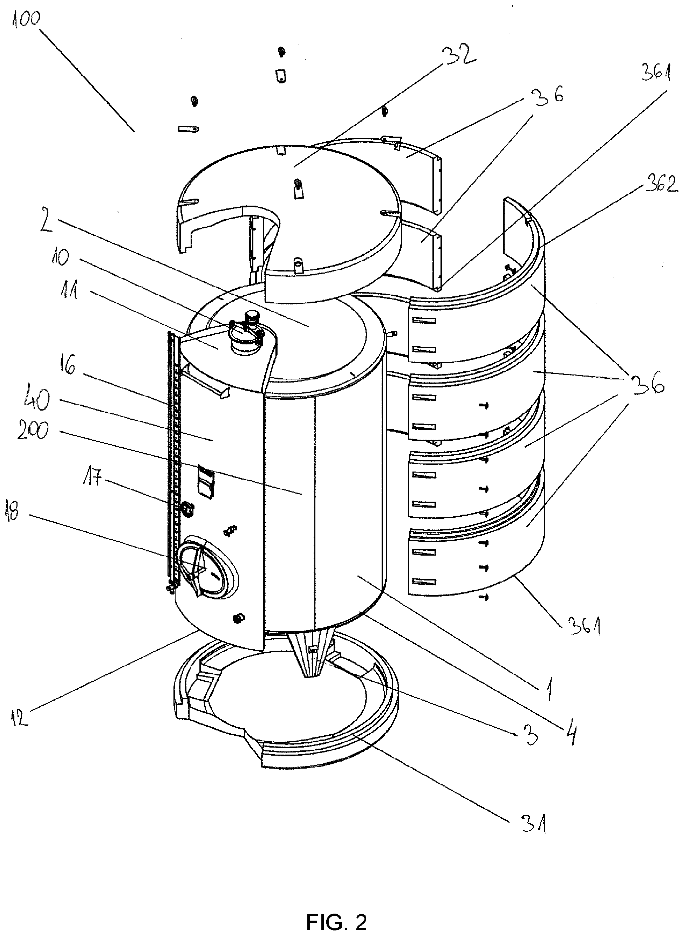

Figure 2. A view of components of the self-standing thermally insulated tank for preservation of wine and other liquid foodstuffs

### A LIST OF REFERENCE SIGNS USED IN DRAWINGS

1- mantle
2- cap
3- leg
4- bottom
10- top door
11- outer cap segment
12- outer bottom segment
16- level indicator
17- thermometer
18- main door
40- front insulation segment
100- self-standing thermally insulated tank for preservation of wine and other liquid foodstuffs
200- inner tank
31- bottom insulation segment
32- cap insulation segment
36- lateral insulation segment
361- protrusion
362- recess

### DETAILED DESCRIPTION OF AT LEAST ONE WAY OF CARRYING OUT THE INVENTION

The self-standing thermally insulated tank for preservation of wine and other liquid foodstuffs 100 disclosed herein is designed in such a way that the inner tank is made of stainless-steel sheet 1.5 or 2 mm thick and is welded by joining three segments: mantle 1, cap 2 on the upper side and bottom 4 on the lower side of mantle 1. That the tank is self-standing is ensured by welding at least three stainless steel legs 3 on the bottom 4. Necessary technological openings are also made on the inner tank. A front insulation segment 40 is then constructed which has an installed thermal insulation throughout the entire volume. The front insulation segment 40 is fixedly attached to the inner tank 200. In addition to this fixed front insulation segment 40 which is filled with polyurethane foam, a mobile part of thermal insulation is constructed in insulation segments 31, 32, 36 which contain thermal insulation of polyurethane foam throughout their entire volume. These segments are placed on the mantle portion 1, the cap 2 portion from the upper side, and on the bottom 4 portion from the lower side of the mantle so that with the front insulation segment 40 they form a unit that completely thermally insulates the inner tank 200 from the environment.

The front insulation segment 40, the outer cap segment 11, and the outer bottom segment 12 might be combined into a single unit. Tank 100 comprises the top door 10, the main door 18, the level indicator 16, and the thermometer 17, wherein the top door 10 is positioned on the outer cap segment 11 to get access to the inner tank 200. The main door 18, the level indicator 16, and the thermometer 17 are positioned on the front insulation segment 40, wherein the level indicator 16 shows the liquid level in the inner tank 200, the thermometer 17 shows the liquid temperature in the inner tank 200, and the inner tank 200 can be accessed through the main door 18. In one embodiment the self-standing thermally insulated tank 100 is designed in a way it comprises lateral insulation segments 36 made in the shape of a sector of a cylinder mantle portion with a 150 degrees arc range, wherein the front insulation 40 has a 60 degrees arc width. The lateral insulation segments 36 are interconnected by screws and are likewise connected to the front insulation segment 40. Stainless steel screws are used. In one embodiment the each lateral insulation segment 36 has an upper side and a lower side observed vertically to the tank 100, wherein on the upper side there is a recess 362 and on the lower side there is a protrusion 361 and wherein two lateral insulation segment 36 are arranged directly one above other, then the protrusion 361 of said upper lateral insulation segment 36 fits in the recess 362 of said lower lateral insulation segment 36 so the air flow between this two lateral insulation segments 36 is blocked.

The cap insulation segment 32 is in the shape of the cylinder top with the mantle portion designed to fit the cap 2 of the inner tank and has a sector that shape-wise corresponds to the outer cap segment 10 so when the cap insulation segment 32 is placed on the cap 2, the said closely touches the outer cap segment 10. The cap insulation segment 32 is tightly seated on the upper side of the uppermost pair of the lateral insulation segments 36. The bottom insulation segment 31 is in the shape of the cylinder bottom with a mantle portion designed to fit the bottom 4 of the inner tank and has a sector that shape-wise corresponds to the outer bottom segment 12, so when the bottom insulation segment 31 is placed on the bottom 4 the said closely touches the outer bottom segment 12. The bottom insulation segment 31 is tightly seated on the lower side of the lowermost pair of lateral insulation segments 36.

In one embodiment this self-standing thermally insulated tank 100 comprises 8 lateral insulation segments 36. In another embodiment, this tank comprises 10 lateral insulation segments 36.

The present invention also discloses the process of remodelling the existing non-insulated tank for preservation of wine and other liquid foodstuffs. In doing so, the front insulation segment 40 is installed on the existing tank which is, in fact, the inner tank 200 of the new thermally insulated tank and then the bottom insulation segment 31, the cap insulation segment 32, and lateral insulation segments 36 are added as mobile parts. These parts are interconnected by stainless steel screws.

## Claims

1. A self-standing thermally insulated tank for preservation of wine and other liquid foodstuffs (100) **characterized in that** it comprises at least three legs (3) and an inner tank (200) in the shape of a cylinder constituted by a mantle (1), a cap (2) on the upper side and a bottom (4) on the lower side, wherein the inner tank (200) stands on said legs (3) symmetrically arranged on the bottom (4) and further comprises a front insulation segment (40) with an installed thermal insulation throughout its entire volume wherein the said front insulation segment (40) is attached to the inner tank (200), and further the tank (100) comprises insulation segments (31,32,36) which in their entire volume contain thermal insulation and are placed on the mantle (1) portion, and together with the cap (2) portion from the upper side, the bottom (4) portion on the lower side and the said front insulation segment (40) they form a single unit which entirely thermally insulates the inner tank (200) from the environment, wherein the said front insulation segment (40) comprises an outer mantle segment, an outer cap segment (11), and an outer bottom segment (12) that are arranged as a single unit, wherein the tank (100) comprises a top door (10), a main door (18), a level indicator (16) and a thermometer (17), and wherein the top door (10) is arranged on the outer cap segment (11) so the inner tank (200) can be accessed therethrough, while the main door (18), the level indicator (16) and the thermometer (17) are located on the said front insulation segment (40), wherein the level indicator (16) is arranged in a way that it can show the liquid level in the said inner tank (200) and the thermometer (17) is arranged so it can indicate the liquid temperature in the said inner tank (200) and the inner tank (200) can be accessed through the main door (18).

2. The self-standing thermally insulated tank (100) as claimed in previous claim, **characterized in that** it comprises lateral insulation segments (36) designed in the shape of a sector of a cylinder mantle portion with an arc range from 90 to 165 degrees, wherein the said front insulation segment (40) has an arc width from 30 to 80 degrees, wherein the arc angle of the said lateral insulation segment(36) is determined by subtracting from 360 degrees the arc width of the front insulation (40) in degrees and the amount thus obtained is divided by two, wherein there are always two lateral insulation segments (36) in one band that are interconnected by screws and are connected to the front insulation segment (4) in the same way.

3. The self-standing thermally insulated tank (100) as claimed in claim 2, **characterized in that** each lateral insulation segment (36) has an upper side and a lower side observed vertically to the tank (100), wherein on the upper side there is a recess (362) and on the lower side there is a protrusion (361) and wherein two lateral insulation segment (36) arranged directly one above other, then the protrusion (361) of said upper lateral insulation segment (36) fits in the recess (362) of said lower lateral insulation segment (36) so the air flow between this two lateral insulation segments (36) is blocked.

4. The self-standing thermally insulated tank (100) as claimed in claim 3, **characterized in that** it comprises a cap insulation segment (32) which is in the shape of a cylinder top with the mantle portion designed to fit on the cap (2) of the inner tank (200) and has a sector that shape-wise corresponds to the outer cap segment (11), so when the cap insulation segment (32) is placed on the cap (2), the said closely touches the outer cap segment (11) and the cap insulation segment (32) is tightly seated on the upper side of the uppermost pair of the lateral insulation segments (36).

5. The self-standing thermally insulated tank (100) as claimed in claim 3 or 4, **characterized in that** it comprises a bottom insulation segment (31) which is in the shape of the cylinder bottom with the mantle portion designed to fit the bottom (4) of the inner tank (200) and has a sector that shape-wise corresponds to the outer bottom segment (12), so when the bottom insulation segment (31) is placed on the bottom (4) the said closely touches the outer bottom segment (12) and the bottom insulation segment (31) is tightly seated on the lower side of the lowermost pair of lateral insulation segments (36).

6. The self-standing thermally insulated tank (100) as claimed in claim 5, **characterized in that** it comprises at least 2 lateral insulation segments (36).

7. The self-standing thermally insulated tank (100) as claimed in claim 6, **characterized in that** it comprises 4,6,8, or 10 lateral insulation segments (36).

8. The self-standing thermally insulated tank (100) as claimed in any of the previous claims, **characterized in that** each insulation segment (31,32,36) comprises a front stainless-steel sheet on the back of which an antibacterial agent and afterward polyurethane foam has been applied, so when the insulation segments (31,32,36) are installed on the inner tank (200) there is a polyurethane foam between said inner tank (200) and said stainless-steel sheet.

9. The process of upgrading an existing non-insulated tank for preservation of wine and other liquid foodstuffs (100) **characterized in that** during the process a front insulation segment (40) is installed on the existing tank which forms the inner tank (200) of the new thermally insulated tank and then a bottom insulation segment (31), a cap insulation segment (32) and lateral insulation segments (36) are installed as mobile parts.
